# EUROPEAN PATENT SPECIFICATION

(11) **EP 0 902 030 B1**
(45) Date of publication and mention of the grant of the patent: **02.10.2002**
(21) Application number: 98306581.4
(22) Date of filing: 18.08.1998
(51) Int. Cl.: C07F 7/02, C01B 33/107

(54) **Compounds containing tetradecachlorocyclohexasilane dianion**
Tetradecachlorcyclohexasilandianon enthaltende Verbindungen
Composés contenant l'ion tetradecachlorocyclohexasilane

(30) Priority: 27.08.1997 US 57704 P; 30.03.1998 US 50141
(43) Date of publication of application: 17.03.1999
(73) Proprietor: Dow Corning Corporation, Midland, MI 48686-0994 (US); NDSU Research Foundation, Fargo, North Dakota 58105-5516 (US)
(72) Inventor: Boudjouk, Philip Raymond, Fargo, North Dakota 58102 (US); Kim, Beon-Kyu, Fargo, North Dakota 58102 (US); Remington, Michael Perry, Fargo, North Dakota 58104 (US); Chauhan, Bhanu, Fargo, North Dakota 58102 (US)
(74) Representative: Kyle, Diana

(56) References cited:
- HENGGE, E. ET AL: "Preparation and characterization of cyclohexasilane Si6H12" Z. ANORG. ALLG. CHEM. (1979), 459, 123-30, XP002110230
- BOUDJOUK, PHILIP ET AL: "An unexpected redistribution of trichlorosilane. Synthesis, structure and bonding of (N,N,N',N'- tetraethylethylenediamine)dichlorosilane" J. CHEM. SOC., DALTON TRANS. (1998), (6), 877-880 , XP002110231

## Description

The present invention relates to compounds containing a tetradecachlorocyclohexasilane dianion and to the preparation of such compounds by an amine-promoted coupling reaction of trichlorosilane. This invention also relates to methods of preparing cyclohexasilane and dodecaorganocyclohexasilanes.

It is well known in the art that the Wurtz-type coupling of haloorganosilanes provides a useful synthetic route to polysilanes. For example, linear polysilanes are prepared by the alkali-metal reductive coupling of dichloroorganosilanes and branched polysilanes are prepared by the reductive coupling of trichloroorganosilanes.

However, only a limited number of amine-promoted coupling reactions of silanes are known in the art. These reactions are not generally useful for the preparation of polysilanes. For example, Kaczmarczyk et al. disclose the disproportionation of disilicon hexachloride in the presence of trimethylamine to yield either hexasilicon tetradecachloride (J. Amer. Chem. Soc. 82, 751, 1960) or pentasilicon dodecachloride (J. Inorg. Nucl. Chem. 17, 186-188, 1961), depending on the reaction conditions. Wiber et al. teach the synthesis of pentasilicon dodecachloride by treatment of disilicon hexachloride with trimethylamine using a modification of the reaction conditions described by Kaczmaryk et al. for the preparation of hexasilicon tetradecachloride (Angew. Chem. Int. Ed., 1, No. 9, 517, 1962).

We have now discovered an amine-promoted coupling reaction of trichlorosilane that produces compounds containing a tetradecachlorocyclohexasilane dianion.

The present invention is directed to a compound containing a tetradecachlorocyclohexasilane dianion and to a method for its preparation. Said method comprises the steps of:
A) contacting trichlorosilane with a reagent composition comprising a tertiary polyamine; and
(B) recovering a compound containing a tetradecachlorocyclohexasilane dianion.

The present invention is further directed to a method of preparing cyclohexasilane, said method comprising contacting a compound containing a tetradecachlorocyclohexasilane dianion with a metal hydride reducing agent.

The present method also produces cyclohexasilane, a compound useful in the deposition of amorphous silicon films, in fewer steps compared to the conventional method reported by Hengge et al (Angew. Chem. Int. Ed. 16, No. 6, 403, 1977). Moreover, our claimed method of preparing cyclohexasilane obviates the difficulties associated with isolating the dodecaphenylcyclohexasilane intermediate in the prior art synthesis.

This invention is still further directed to a method of preparing a dodecaorganocyclohexasilane, said method comprising contacting a compound containing a tetradecachlorocyclohexasilane dianion with a reagent having the formula RMgX wherein R is alkyl or aryl and X is chloro, bromo or iodo.

In the present application, the term "pedeta" represents N,N,N',N'',N''-pentaethyldiethylenetriamine and the term "teeda" denotes N,N,N',N'-tetraethylethylenediamine.

The compounds of the present invention contain a tetradecachlorocyclohexasilane dianion. The counterion in the compounds can be any cation that forms a stable salt with the tetradecachlorocyclohexasilane dianion. Preferably, the compound containing the tetradecachlorocyclohexasilane dianion has the formula [X⁺¹]₂[Si₆Cl₁₄⁻²] wherein X is pedeta·SiH₂Cl or Ph₄P and wherein pedeta is as defined above.

The compounds of this invention are prepared by contacting trichlorosilane with a reagent composition comprising a tertiary polyamine and by then recovering the compound containing the tetradecachlorocyclohexasilane dianion. The tertiary polyamine contains at least two tertiary nitrogen atoms and preferably contains two or three tertiary nitrogen atoms. Suitable tertiary polyamines include nitrogen-substituted derivatives of ethylenediamine and diethylenetriamine wherein the substituents are alkyl having 1 to 4 carbon atoms or aryl.

In a preferred embodiment of this invention, trichlorosilane is contacted with pedeta and the compound having the formula [pedeta·SiH₂Cl⁺¹]₂[Si₆Cl₁₄⁻²] is subsequently recovered from the mixture. In another preferred embodiment, trichlorosilane is contacted with a mixture of teeda and triphenylphosphonium chloride and the compound having the formula [Ph₄P⁺¹]₂[Si₆Cl₁₄⁻²] is then recovered from the mixture.

The trichlorosilane is contacted with the reagent composition in any standard reactor suitable for contacting a chlorosilane with another reactant. The reactor is, for example, a continuous-stirred batch type reactor, semi-batch type reactor or a continuous type reactor.

The present method is preferably performed under substantially anhydrous conditions. This is readily accomplished by purging the reactor with a dry inert gas, such as nitrogen or argon, and thereafter maintaining a blanket of such gas in the reactor.

Although the compound containing the tetradecachlorocyclohexasilane dianion is prepared in the absence of a diluent, the step of contacting trichlorosilane with the reagent composition is preferably done in the presence of an organic solvent. Any organic solvent, or mixture of organic solvents, that does not interfere with the coupling reaction of trichlorosilane to form the tetradecachlorocyclohexasilane dianion is suitable. Preferably, the organic solvent is a chlorinated hydrocarbon such as chloroform, dichloromethane and 1,2-dichloroethane. More preferably, the organic solvent is dichloromethane. When present, the volume of the organic solvent is typically from 0.01 to 100 and preferably 1 to 10 times the combined volume of trichlorosilane and the reagent composition.

The trichlorosilane is typically contacted with the reagent composition at a temperature of from 0 to 120°C. Higher temperatures may be achieved under elevated pressures or in a higher boiling solvent under reflux conditions. Preferably, trichlorosilane is contacted with the reagent composition at a temperature of from 15 to 30°C.

The mole ratio of trichlorosilane to the reagent composition can vary over a wide range. In the preparation of the preferred compound [pedeta·SiH₂Cl⁺¹]₂[Si₆Cl₁₄⁻²], the mole ratio of trichlorosilane to pedeta is normally from 0.1:1 to 10:1, and preferably from 2:1 to 4:1. In the preparation of the preferred compound [Ph₄P⁺¹]₂[Si₆Cl₁₄⁻²], the mole ratio of trichlorosilane to teeda to Ph₄PCl is typically from 20:20:1 to 1:1:1 and preferably from 10:7:1 to 2:2:1.

Preferably, the compound containing the tetradecachlorocyclohexasilane dianion is recovered from the reaction mixture by crystallization or precipitation. For example, the recovery of the compound containing the tetradecachlorocyclohexasilane dianion is achieved by adding a sufficient quantity of an organic solvent that effects crystallization of the compound. Crystallization may take place at room temperature or below, for example, -20°C. Alternatively, the compound containing the tetradecachlorcyclohexasilane dianion is recovered from the reaction mixture by adding a sufficient quantity of an organic solvent that effects precipitation of the compound.

Any organic solvent or mixture of such solvents that effects crystallization or precipitation of the compound containing the tetradecachlorocyclohexasilane dianion from the reaction mixture and which does not react with the compound being recovered is useful in the present method. Examples of suitable organic solvents include hydrocarbons such as pentane, hexane, heptane, octane and nonane; or ethers such as diethyl ether and tetrahydrofuran. Preferably, the organic solvent used for effecting crystallization or precipitation of the compounds of the present invention is pentane, hexane, heptane, octane or nonane. More preferably, the organic solvent is pentane.

The tetradecachlorocyclohexasilane dianion is thereafter chemically reduced to cyclohexasilane. This reduction reaction is performed by contacting the compound containing the tetradecachlorocyclohexasilane dianion with a metal hydride reducing agent in an organic solvent at a temperature of from -110 to 150°C. Preferably, the compound containing the tetradecachlorocyclohexasilane dianion has the formula [x⁺¹]₂[Si₆Cl₁₄⁻²] wherein X is defined above. Also, preferably, the reducing agent is lithium aluminum hydride or diisobutylaluminum hydride.

The tetradecachlorocyclohexasilane dianion can also be contacted with a Grignard reagent to form a dodecaorganocyclohexasilane. The Grignard reagent is represented by the formula RMgX wherein R is alkyl or aryl and X is chloro, bromo or iodo. Suitable R groups are methyl, ethyl, propyl, t-butyl and phenyl. Preferably, the compound containing the tetradecachlorocyclohexasilane dianion has the formula [X⁺¹]₂[Si₆Cl₁₄⁻²] wherein X is defined above. The reaction of the compound containing the tetradecachlorocyclohexasilane dianion with Grignard reagents is conveniently performed by standard methods known in the art for reacting chlorosilanes with Grignard reagents.

All reactions were performed in a glass flask under a blanket of dry nitrogen. Trichlorosilane was distilled before use. N,N,N',N'',N''-pentaethyldiethylenetriamine (pedeta) was distilled from sodium metal under a nitrogen atmosphere. N,N,N',N'-tetraethylethylenediamine (teeda) was refluxed over CaH₂ and then distilled under a nitrogen atmosphere. Dichloromethane was distilled from P₂O₅ under a nitrogen atmosphere just before use. Materials were added to the flask through a rubber septum by means of a syringe.

### Example 1

This example demonstrates the preparation of [pedeta·SiH₂Cl⁺¹]₂ [Si₆Cl₁₄²⁻]. Trichlorosilane (5.52 g; 41.0 mmol) was added to a clear, colorless solution of pedeta (4.0 g, 16 mmol) in dichloromethane (50 mL) under an atmosphere of dry nitrogen gas. A slight warming of the reaction vessel contents occurred upon addition. After stirring for 24 hours at room temperature, dry, olefin-free hexane (10 mL) was added to the reaction mixture. The mixture was allowed to stand for 3 days at room temperature, during which time white crystals slowly deposited from solution. The crystals (1.8 g, 1.4 mmol) were isolated by filtration under nitrogen. The reaction proceeded with greater than 95% conversion of the starting materials, as determined by ¹HNMR. IR (KBr) 2202 cm⁻¹; mp 102-103 °C; elemental analysis calculated for [pedeta·SiH₂Cl⁺¹]₂ [Si₆Cl₁₄²⁻]: C, 26.22; H, 5.50; N, 6.55. Found C, 26.20; H, 5.47; N, 6.49.

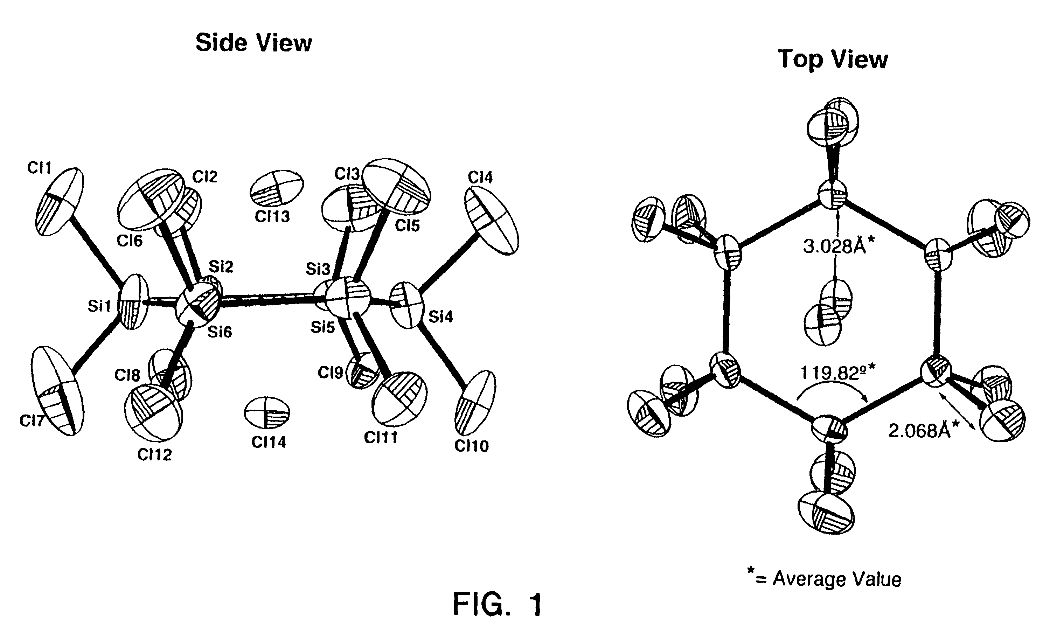

Elemental analysis, infrared spectroscopy and X-ray analysis confirmed that these crystals are a salt having the formula [pedeta·SiH₂Cl⁺¹]₂[Si₆Cl₁₄ ⁻²]. The salt is composed of two identical cationic parts in which the silicon atom is hexacoordinated to three nitrogen atoms from pedeta, two hydrogen atoms and one chlorine atom. The two hydrogen atoms occupy the axial positions and the four equatorial positions are occupied by the three nitrogen atoms and the chlorine atom. In the dianion part of the salt, the six silicon atoms form a planar six-membered ring. The 14 chlorine atoms are of two kinds: a set of twelve equivalent chlorine atoms bonded in pairs to each of the six silicon atoms and a set of two chlorine atoms located on the six fold axis of the ring. The structure of Si₆Cl₁₄²⁻ is illustrated in Figure 1. The Scientific International Unit conversion for 1 Å is 0.1 nm.

Figure 1 shows the molecular structure of the tetradecachlorocyclohexasilane dianion, Si₆Cl₁₄⁻², as determined by X-ray diffraction.

### Example 2

This example demonstrates the preparation of [Ph₄P⁺¹]₂ [Si₆Cl₁₄²⁻]. Trichlorosilane (5.4 g; 39 mmol) was added to a clear, colorless solution of teeda (3.4 g, 20 mmol) and tetraphenylphosphonium chloride (5.0 g, 13 mmol) in dichloromethane (50 mL) under an atmosphere of dry nitrogen gas. A slight warming of the reaction vessel contents occurred upon addition. After stirring for 24 hours at room temperature, dry, olefin-free hexane (10 mL) was added to the reaction mixture. The mixture was allowed to stand for 3 days at room temperature, during which time white crystals slowly deposited from solution. The crystals (0.7 g, 0.52 mmol) were isolated by filtration under nitrogen. The reaction proceeded with greater than 95% conversion of the starting materials, as determined by ¹HNMR. Elemental analysis, infrared spectroscopy and X-ray analysis confirmed that these crystals are a salt having the formula [Ph₄P⁺]₂[Si₆Cl₁₄⁻² ]. IR (KBr) 3110, 1100, 540 cm⁻¹; mp (decomposition) 250°C.; elemental analysis calculated for [Ph₄P⁺¹]₂ [Si₆Cl₁₄²⁻]: C, 42.91; H, 3.00. Found C, 43.89; H, 3.20.

### Example 3

This example demonstrates the preparation of cyclohexasilane from [pedeta·SiH₂Cl⁺¹]₂[Si₆Cl₁₄⁻²] and lithium aluminum hydride. A mixture of [pedeta·SiH₂Cl⁺¹]₂[Si₆Cl₁₄⁻²] (7.31 g, 5.74 mmol) and lithium aluminum hydride (1.08 g, 28.5 mmol) was placed in dry, nitrogen filled, round bottom flask containing a magnetic stir bar. Dry diethyl ether (115 mL) was added and the resulting slurry was stirred for 3 hours at which time the reaction was complete as determined by ¹HNMR spectroscopy. During the course of the reaction, SiH₄ was produced as a gas and trapped in a degassed aqueous solution of potassium hydroxide. The solution was decanted from the salts, cooled, and filtered to remove remaining salts.
These operations were carried out under an inert gas atmosphere. Analysis of the solution by ¹HNMR spectroscopy indicated that cyclohexasilane was formed as the dominant silicon-containing product in an estimated yield of greater than 80%. ¹H NMR (270 MHz, C₆D₆) δ 3.35, ²⁹Si NMR (C₆D₆) δ -106.96; J_{Si-H} = 195 Hz.

### Example 4

This example demonstrates the preparation of cyclohexasilane from [pedeta·SiH₂Cl⁺¹]₂[Si₆Cl₁₄⁻²] and diisobutylaluminum hydride. A solution of [pedeta·SiH₂Cl⁺¹]₂[Si₆Cl₁₄⁻²] (0.57 g; 0.44 mmol) and benzene (20 mL) was placed in dry, nitrogen filled, round bottom flask containing a magnetic stir bar. Diisobutylaluminum hydride in hexane (7.12 mL of a 1.0M solution, 7.12 mmol) was added. Cyclohexasilane was formed in greater than 90% yield as determined by ¹HNMR spectroscopy. ¹H NMR (270 MHz, C₆D₆) δ 3.33; ²⁹Si NMR (C₆D₆) δ -107.55; J_{Si-H} = 200 Hz.

### Example 5

This example demonstrates the preparation of dodecamethylcyclohexasilane from [pedeta·SiH₂Cl]₂[Si₆₋ Cl₁₄⁻²]. Tetrahydrofuran (15 mL) and
[pedeta·SiH₂Cl⁺¹]₂[Si₆₋ Cl₁₄⁻²] (1.0 g, 0.78 mmol) were combined in a dry, three-neck flask under nitrogen. To this mixture was added methylmagnesium bromide (12.4 mmol). After stirring for 24 hours at room temperature, the reaction mixture was hydrolyzed and extracted with hexane and ether. The combined extracts were concentrated under reduced pressure. Evacuation of the residue under high vacuum overnight gave dodecamethylcyclohexasilane (0.23 g, 0.66 mmol, 85% yield). ¹H NMR (270 MHz, C6D6) δ 0.22; ¹³CNMR (C6D6) δ -6.15; ²⁹SiNMR (C₆D₆) δ -41.73.

## Claims

1. A method of preparing a compound containing a tetradecachlorocyclohexasilane dianion, said method comprising the steps of:
(A) contacting trichlorosilane with a reagent composition comprising a tertiary polyamine; and
(B) recovering a compound containing a tetradecachlorocyclohexasilane dianion.

2. The method according to claim 1 wherein said step of contacting trichlorosilane with the reagent composition is performed in the presence of an organic solvent.

3. The method according to claim 2 wherein the organic solvent is selected from the group consisting of chloroform, dichloromethane and 1,2-dichlorethane.

4. The method according to claim 2 wherein the organic solvent has a volume of from 1 to 10 times the combined volume of trichlorosilane and the reagent composition.

5. The method according to claim 2 wherein said step of contacting trichlorosilane with the reagent composition is carried out at a temperature of from 0 to 120°C.

6. The method according to claim 2 wherein said step of recovering the compound containing the tetradecachlorocyclohexasilane dianion is achieved by adding an organic solvent that effects crystallization or precipitation of the compound.

7. The method according to claim 6 wherein the organic solvent that effects crystallization of the compound is pentane, hexane, heptane, octane or nonane.

8. The method according to claim 1 wherein the reagent composition comprises N,N,N',N'',N''-pentaethyldiethylenetriamine and the compound containing the tetradecachlorcyclohexasilane dianion has the formula [pedeta·SiH₂Cl⁺¹]₂[Si₆Cl₁₄⁻²] wherein pedeta is N,N,N',N'',N''-pentaethyldiethylenetriamine.

9. The method according to claim 8 wherein the mole ratio of trichlorosilane to N,N,N',N'',N''-pentaethyldiethylenetriamine is from 0:1 to 10:1.

10. The method according to claim to claim 1 wherein the reagent composition comprises a mixture of N,N,N',N'-tetraethylethylenediamine and tetraphenylphosphonium chloride and the compound containing the tetradecachlorocyclohexasilane dianion has the formula [Ph₄P⁺¹]₂[Si₆Cl₁₄⁻²].

11. The method according to claim 10 wherein the mole ratio of trichlorosilane to N,N,N',N'-tetraethylethylenediamine to tetraphenylphosphonium chloride is from 20:20:1 to 1:1:1.

12. A method of preparing cyclohexasilane, said method comprising contacting a compound containing a tetradecachlorocyclohexasilane dianion with a metal hydride reducing agent.

13. The method according to claim 12 wherein the compound containing the tetradecachlorocyclohexasilane dianion has the formula [X⁺¹]₂[Si₆Cl₁₄⁻²] wherein X is pedeta·SiH₂Cl or Ph₄P and wherein pedeta is N,N,N',N'',N''-pentaethyldiethylenetriamine.

14. The method according to claim 12 wherein the metal hydride reducing agent is lithium aluminum hydride or diisobutylaluminum hydride.

15. A method of preparing a dodecaorganocyclohexasilane, said method comprising contacting a compound containing a tetradecachlorocyclohexasilane dianion with a reagent having the formula RMgX wherein R is alkyl or aryl and X is chloro, bromo or iodo.

16. The method according to claim 15 wherein the compound containing the tetradecachlorocyclohexasilane dianion has the formula [X⁺¹]₂[Si₆Cl₁₄⁻²] wherein X is pedeta·SiH₂Cl or Ph₄P and wherein pedeta is N,N,N',N'',N''-pentaethyldiethylenetriamine.

## Patentansprüche

1. Verfahren zur Herstellung einer Verbindung, enthaltend ein Tetradecachlorcyclohexasilandianion, wobei genanntes Verfahren die Schritte umfasst:
(A) Inkontaktbringen von Trichlorsilan mit einer Reagenzzusammensetzung, enthaltend ein tertiäres Polyamin, und
(B) Rückgewinnung einer Verbindung, enthaltend ein Tetradecachlorcyclohexasilandianion.

2. Verfahren nach Anspruch 1, wobei genannter Schritt der Inkontaktbringung des Trichlorsilans mit der Reagenzzusammensetzung in Gegenwart eines organischen Lösungsmittels erfolgt.

3. Verfahren nach Anspruch 2, wobei das organische Lösungsmittel ausgewählt ist aus der Gruppe bestehend aus Chloroform, Dichlormethan und 1,2-Dichlorethan.

4. Verfahren nach Anspruch 2, wobei das organische Lösungsmittel das 1- bis 10fache Volumen des vereinigten Volumens von Trichlorsilan und der Reagenzzusammensetzung aufweist.

5. Verfahren nach Anspruch 2, wobei besagter Schritt des Inkontaktbringens von Trichlorsilan mit der Reagenzzusammensetzung bei einer Temperatur von 0 bis 120°C durchgeführt wird.

6. Verfahren nach Anspruch 2, wobei genannter Schritt der Rückgewinnung der Verbindung, enthaltend das Tetradecachlorcyclohexasilandianion, durch Zugabe eines organischen Lösungsmittels, welches Kristallisation oder Ausfällung der Verbindung bewirkt, erreicht wird.

7. Verfahren nach Anspruch 6, wobei das organische Lösungsmittel, das Kristallisation der Verbindung bewirkt, Pentan, Hexan, Heptan, Octan oder Nonan ist.

8. Verfahren nach Anspruch 1, wobei die Reagenzzusammensetzung N,N,N',N",N"-Pentaethyldiethylentriamin enthält und die das Tetradecachlorcyclohexasilandianion enthaltende Verbindung die Formel [Pedeta·SiH₂Cl⁺¹]₂[Si₆Cl₁₄⁻²] aufweist, wobei Peteda N,N,N',N",N"-Pentaethyldiethylentriamin bedeutet.

9. Verfahren nach Anspruch 8, wobei das Molverhältnis von Trichlorsilan zu N,N,N',N",N"-Pentaethyldiethylentriamin von 0:1 bis 10:1 beträgt.

10. Verfahren nach Anspruch 1, wobei die Reagenzzusammensetzung eine Mischung aus N,N,N',N'-Tetraethylethylendiamin und Tetraphenylphosphoniumchlorid enthält und die das Tetradecachlorcyclohexasilandianion enthaltende Verbindung die Formel [Ph₄P⁺¹]₂[Si₆Cl₁₄⁻²] aufweist.

11. Verfahren nach Anspruch 10, wobei das Molverhältnis von Trichlorsilan zu N,N,N',N'-Tetraethylethylendiamin zu Tetraphenylphosphoniumchlorid von 20:20:1 bis 1:1:1 beträgt.

12. Verfahren zur Herstellung von Cyclohexasilan, wobei besagtes Verfahren das Inkontaktbringen einer ein Tetradecachlorcyclohexasilandianion enthaltenden Verbindung mit einem Metallhydridreduktionsmittel umfasst.

13. Verfahren nach Anspruch 12, wobei die das Tetradecachlorcyclohexasilandianion enthaltende Verbindung die Formel [X⁺¹]₂[Si₆Cl₁₄⁻²] aufweist, wobei X Pedeta·SiH₂Cl oder Ph₄P darstellt und wobei Pedeta N,N,N',N",N"-Pentaethyldiethylentriamin ist.

14. Verfahren nach Anspruch 12, wobei das Metallhydridreduktionsmittel Lithiumaluminiumhydrid oder Diisobutylaluminiumhydrid ist.

15. Verfahren zur Herstellung eines Dodecaorganocyclohexasilans, wobei besagtes Verfahren das Inkontaktbringen einer ein Tetradecachlorcyclohexasilandianion enthaltenden Verbindung mit einem Reagenz der Formel RMgX umfasst, wobei R Alkyl oder Aryl ist und X Chlor, Brom oder Jod darstellt.

16. Verfahren nach Anspruch 15, wobei die das Tetradecachlorcyclohexasilandianion enthaltende Verbindung die Formel [X⁺¹]₂[Si₆Cl₁₄⁻²] aufweist, wobei X Pedeta·SiH₂Cl oder Ph₄P darstellt und wobei Pedeta N,N,N',N",N"-Pentaethyldiethylentriamin ist.

## Revendications

1. Procédé de préparation d'un composé contenant un anion tétradécachlorocyclohexasilane, ledit procédé comprenant les étapes :
(A) de mise en contact de trichlorosilane avec une composition de réactifs comprenant une polyamine tertiaire ; et
(B) de récupération d'un composé contenant un dianion tétradécachlorocyclohexasilane.

2. Procédé selon la revendication 1, dans lequel ladite étape de mise en contact du trichlorosilane avec la composition de réactifs est effectuée en présence d'un solvant organique.

3. Procédé selon la revendication 2, dans lequel le solvant organique est choisi dans le groupe constitué par le chloroforme, le dichlorométhane et le 1,2-dichloroéthane.

4. Procédé selon la revendication 2, dans lequel le solvant organique a un volume de 1 à 10 fois le volume combiné du trichlorosilane et de la composition de réactifs.

5. Procédé selon la revendication 2, dans lequel ladite étape de mise en contact du trichlorosilane avec la composition de réactifs est effectuée à une température de 0 à 120°C.

6. Procédé selon la revendication 2, dans lequel ladite étape de récupération du composé contenant le dianion tétradécachlorocyclohexasilane est réalisée par addition d'un solvant organique qui provoque la cristallisation ou la précipitation du composé.

7. Procédé selon la revendication 6, dans lequel le solvant organique qui provoque la cristallisation du composé est le pentane, l'hexane, l'heptane, l'octane ou le nonane.

8. Procédé selon la revendication 1, dans lequel la composition de réactifs comprend la N,N,N',N",N"-pentaéthyldiéthylènetriamine et le composé contenant le dianion tétradécachlorocyclohexasilane a la formule [pedeta.SiH₂Cl⁺¹]₂[Si₆Cl₁₄⁻²] dans laquelle pedeta est N,N,N',N",N"-pentaéthyldiéthylènetriamine.

9. Procédé selon la revendication 8, dans lequel le rapport molaire du trichlorosilane à la N,N,N',N",N"-pentaéthyldiéthylènetriamine est de 0/1 à 10/1.

10. Procédé selon la revendication 1, dans lequel la composition de réactifs comprend un mélange de N,N,N',N'-tétraéthyléthylènediamine et de chlorure de tétraphénylphosphonium et le composé contenant le dianion tétradécachlorocyclohexasilane a la formule [Ph₄P⁺¹]₂[Si₆Cl₁₄⁻²].

11. Procédé selon la revendication 10, dans lequel le rapport molaire du trichlorosilane à la N,N,N',N'-tétraéthyléthylènediamine au chlorure de tétraphénylphosphonium est de 20/20/1 à 1/1/1.

12. Procédé de préparation de cyclohexasilane, ledit procédé comprenant la mise en contact d'un composé contenant un dianion tétradécachlorocyclohexasilane avec un agent réducteur hydrure métallique.

13. Procédé selon la revendication 12, dans lequel le composé contenant le dianion tétradécachlorocyclohexasilane a la formule [X⁺¹]₂[Si₆Cl₁₄⁻²] dans laquelle X est pedeta.SiH₂Cl ou Ph₄P et dans laquelle pedeta est N,N,N',N",N"-pentaéthyldiéthylènetriamine.

14. Procédé selon la revendication 12, dans lequel l'agent réducteur hydrure métallique est l'hydrure de lithium-aluminium ou l'hydrure de diisobutylaluminium.

15. Procédé de préparation d'un dodécaorganocyclohexasilane, ledit procédé comprenant la mise en contact d'un composé contenant un dianion tétradécachlorocyclohexasilane avec un réactif ayant la formule RMgX dans laquelle R est alkyle ou aryle et X est chloro, bromo ou iodo.

16. Procédé selon la revendication 15, dans lequel le composé contenant le dianion tétradécachlorocyclohexasilane a la formule [X⁺¹]₂[Si₆Cl₁₄⁻²] dans laquelle X est pedeta.SiH₂Cl ou Ph₄P et dans laquelle pedeta est N,N,N',N",N"-pentaéthyldiéthylènetriamine.
